# EUROPÄISCHE PATENTSCHRIFT

(11) **EP 2 102 611 B1**
(45) Veröffentlichungstag und Bekanntmachung des Hinweises auf die Patenterteilung: **14.09.2011**
(21) Anmeldenummer: 07847934.2
(22) Anmeldetag: 06.12.2007
(51) Int. Cl.: G01F 23/284, H01P 1/08, H01Q 1/22

(54) **FÜLLSTANDSMESSGERÄT ZUR ERMITTLUNG UND ÜBERWACHUNG EINES FÜLLSTANDES EINES IM PROZESSRAUM EINES BEHÄLTERS BEFINDLICHEN MEDIUMS**
LEVEL MONITORING DEVICE FOR DETERMINING AND MONITORING A FILL LEVEL OF A MEDIUM IN THE PROCESS AREA OF A VESSEL
APPAREIL DE MESURE D'UN NIVEAU DE REMPLISSAGE POUR DÉTERMINER ET SURVEILLER LE NIVEAU DE REMPLISSAGE D'UNE SUBSTANCE SITUÉE DANS L'ESPACE DE TRAITEMENT D'UN RÉCIPIENT

(30) Priorität: 22.12.2006 DE 102006062223
(43) Veröffentlichungstag der Anmeldung: 23.09.2009
(73) Patentinhaber: Endress+Hauser GmbH+Co. KG, 79689 Maulburg (DE)
(72) Erfinder: BERGMANN, Eric, 79585 Steinen (DE); FEISST, Klaus, 79252 Stegen (DE)
(74) Vertreter: Andres, Angelika Maria
(86) Internationale Anmeldenummer: PCT/EP2007/063464
(87) Internationale Veröffentlichungsnummer: WO 2008/077738

(56) Entgegenhaltungen:
- EP-A- 1 396 710
- US-A1- 2004 173 020
- US-A1- 2005 253 751

## Beschreibung

Die vorliegende Erfindung betrifft ein Füllstandsmessgerät zur Ermittlung und Überwachung eines Füllstandes eines im Prozessraum eines Behälters befindlichen Mediums gemäß dem Oberbegriff des Anspruchs 1.

Eine Messmethode aus einer Vielzahl von Messmethoden zur Ermittlung des Füllstands in einem Behälter, ist die Laufzeit-Messmethode. Bei dieser Messmethode werden beispielsweise Mikrowellen über eine Antennenvorrichtung ausgesendet und die an der Mediumsoberfläche reflektierten Echowellen detektiert, wobei die Laufzeit des Messsignals ein Maß für den Abstand ist. Aus der halben Laufzeit lässt sich demgemäß der Füllstand des Mediums in einem Behälter ermitteln. Die Echokurve stellt hierbei den gesamten Signalverlauf als Funktion der Zeit dar, wobei jeder Messwert der Echokurve der Amplitude eines in einem bestimmten Abstand an einer Oberfläche reflektierten Echosignals entspricht. Die Laufzeit-Messmethode wird im Wesentlichen in zwei Ermittlungsverfahren eingeteilt: Bei der Zeitdifferenzmessung wird die Zeit, die ein breitbandiger Wellensignalimpuls für eine zurückgelegte Wegstrecke benötigt, ermittelt. Bei der Kippfrequenzdifferenzmessung (FMCW - Frequency-Modulated Continuous Wave) wird das ausgesendeten, frequenzmodulierten Hochfrequenzsignals zum reflektierten, empfangenen, frequenzmodulierten Hochfrequenzsignal ermittelt. Im Weiteren wird keine Beschränkung auf ein spezielles Ermittlungsverfahren gemacht.

Bei bestimmten Prozessanwendungen sind die Füllstandsmessgeräte extremen Bedingungen, wie z.B. hohen Temperaturen, hohen Drücken und/oder chemisch aggressiven Stoffen, ausgesetzt. Insbesondere Mikrowellen-Füllständsmessgeräte weisen temperatur- und/oder druckempfindliche Bauteile auf. Diese sind beispielsweise eine Messgerätelektronik und Sende- und/oder Empfangselemente für die Mikrowellen.

Durch das Einfügen eines hermetisch dichten Prozesstrennelements in den Hohlleiter der Antenne die größtmöglichste Sicherheit gewährleistet, da ein zweites "Sicherheitselement" den Prozess, bei einer Trennung der modularen messaktiven Teile, wie z.B. einer Einkoppeleinheit/Erregerelement oder der Messgeräteelektronik, von dem messpassiven Teilen, wie z.B. die Antenne, aufgrund einer Wartung oder Reparatur, verschließt.

Diese Problematik und eine Lösung hierzu ist bereits in der der EP 0 943 902 A1 behandelt. Dort ist ein mit Mikrowellen arbeitendes Füllstandsmessgerät für Hochtemperaturanwendungen mit einer Antenne beschrieben, das ein Prozesstrennelement im Hohlleiterbereich der Antenne aufweist. Als Prozesstrennelement ist unter anderem ein Glasfenster beschrieben. Diese Glasfenster schützen die empfindlichen Bauteile der Füllstandsmessgeräte vor extremen Messbedingungen, wie beispielsweise hohe Temperaturen, hohe Drücke, chemisch aggressiven Medien. Nachteilig an dieser Ausgestaltung des Prozesstrennelements ist, dass Glasfenster bedingt durch die verfügbare Produktionstechnik, beispielsweise aufgrund der unterschiedlichen Materialausdehnungen in einer dünnwandigen metallischen Hülse hergestellt werden muss. Diese Hülse mit dem Glasfenster muss in weiteren, komplizierten Arbeitsschritten in den Hohlleiter eingelötet oder geschweißt werden. Dies erfordert einen hohen zusätzlichen Arbeitsaufwand bei der Herstellung der Antenne des Füllstandmessgeräts. Bei der Vielzahl von Arbeitsschritten werden außerdem die Herstellungskosten und das Sicherheitsrisiko aufgrund von Herstellungsfehlern erhöht.

In der US 2005/0253751 A1 ist ein modularer Aufbau einer Hornantenne beschrieben. Das Prozesstrennelement ist in der Form eines keramischen Anpasskegel, der durch Graphitpackungsringen abgedichtet in den Hohlleiter eingebracht ist, ausgebildet. Diese Ausgestaltung hat den Nachteil, dass eine gas-diffusionsdichte, temperaturbeständige Prozesstrennung nicht erreicht wird.

In der DE 199 50 429 A1 ist ein keramischen Prozesstrennelement beschrieben, das in den Hohlleiter eingeschrumpft ist. Nachteilig ist, dass trotz beispielsweise polierter Grenzflächen am Prozesstrennelement und im Hohlleiter keine Dichtigkeit erreicht wird. Desweiteren können die auf das keramische Prozesstrennelement einwirkenden großen Druckkräfte zu Spannungsrissen führen.

Nachteilig an den angeführten Ausführungsbeispielen eines Prozesstrennelements des Stands der Technik ist, dass die Herstellung sehr aufwendig und teuer ist. Um eine gasdiffusionsdichte Verbindung zwischen einer Keramik und einem umgebenden metallischen Hohlleiter zu erhalten, ist nach dem Stand der Technik nur das Lötverfahren bekannt. Dabei wird die Keramik als Prozesstrennelement in aufwändigen Arbeitsschritten zunächst an der Oberfläche metallisiert, anschließend in eine Löthülse, die einen ähnlichen Wärmeausdehnungskoeffizienten wie die Keramik besitzt (z.B. Kovar), eingelötet und diese zum Schluss mit einem Edelstahl-Hohlleiter verschweißt. Andere Fügetechniken, wie z. B. das Einschrumpfen bei hoher Temperatur, weisen wie schon erwähnt immer eine gewisse Leckrate auf und sind nicht gasdiffusionsdicht.

Der Erfindung liegt daher die Aufgabe zugrunde, ein Füllstandsmessgerät mit einem beständigen, gasdiffusionsdichten Prozesstrennelement zur Prozesstrennung vorzuschlagen, das das die oben genannten Nachteile nicht aufweist und das insbesondere kostengünstig und einfach herzustellen ist,.

Diese Aufgabe der Erfindung wird durch die im Anspruch 1 angeführten Merkmale gelöst.

Vorteilhafte Weiterentwicklungen der Erfindung sind in den Unteransprüchen angegeben.

Weitere Einzelheiten, Merkmale und Vorteile des Gegenstandes der Erfindung ergeben sich aus der nachfolgenden Beschreibung mit den zugehörigen Zeichnungen, in denen bevorzugte Ausführungsbeispiele der Erfindung dargestellt sind. In den Figuren dargestellte Ausführungsbeispiele der Erfindung sind zur besseren Übersicht und zur Vereinfachung die Bauteile oder die Bauteilgruppen, die sich in ihrem Aufbau und/oder in ihrer Funktion entsprechen, mit gleichen Bezugszeichen versehen. Es zeigen:

Fig. 1 eine schematische Darstellung eines Füllstandsmessgeräts der Prozessmesstechnik mit einer Antenneneinheit, und

Fig. 2 einen Längsschnittansicht des Hohlleiters der Antenneneinheit gemäß Fig. 1 mit einem erfindungsgemäßen Prozesstrennelement.

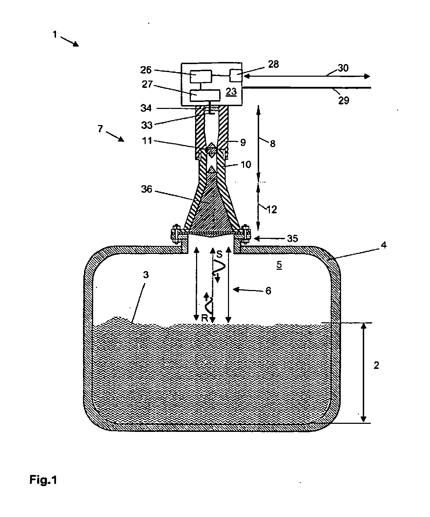

Fig. 1 zeigt ein Füllstandsmessgerät 1 der Prozessmesstechnik das zur Ermittlung des Füllstands 2 in einem Behälter 4 eingesetzt wird. Das Füllstandmessgerät besteht grundlegend aus einer Antenneneinheit 7 und einem Messumformer 23. Die Antenneneinheit 7 weist in diesem Ausführungsbeispiel ein erfindungsgemäßes Prozesstrennelement 11 im Hohlleiter 8 auf. Das Füllstandsmessgerät 1, das über einen Prozessanschluss 35 auf einen Behälter 4 montiert ist, ermittelt beispielsweise nach der Laufzeit-Messmethode den Füllstand 2 eines Mediums 3 bzw. eines Füllguts in den Behälter 4. Die Antenneneinheit 7 ist in diesem Ausführungsbeispiel als eine Hornantenne ausgebildet. Das erfindungsgemäße Prozesstrennelement 11 ist auch bei nderen Typen von Antenneneinheiten, wie z.B. Stabantenne, Planarantennen, Parabolantennen, und in Messsystemen der Zeitbereichsreflektometrie, die mit einer an einem Wellenleiter geführten Mikrowelle arbeiten, einsetzbar. Die Antenneneinheit 7 lässt sich in zwei grundlegende Funktionseinheiten aufteilen: den Hohlleiter 8 und das Abstrahlelement 12.

In dem Messumformer 23 ist eine Sende-/Empfangseinheit 27 vorgesehen, in der die Mikrowellen-Messsignale 6 erzeugt werden. Über ein Einkoppelelement 33 werden die Mikrowellen-Messsignale 6 in den Hohlleiter 8 der Antenneneinheit 7 eingekoppelt. Das Einkoppelelement 33 ist über eine Glasdurchführung 34 gasdiffusionsdicht in den Hohlleiter 8 eingebaut. Die in den Hohlleiter 8 der Antenneneinheit 7 eingekoppelten Mikrowellen-Messsignale 6 werden durch gegebenenfalls einen Füllkörper 36 hindurch von dem Abstrahlelement 10 als Sendesignale S in den Prozessraum 5 mit einer vorgegebenen Abstrahlcharakteristik abgestrahlt. Meist wird eine Abstrahlcharakteristik der Mikrowellen-Messsignale 6 mit einer ebenen Wellenfront angestrebt, um Laufzeitunterschiede bei den Reflexionssignalen R zu vermeiden. Die in den Messraum 5 ausgesendeten Mikrowellen-Messsignale 6 werden an der Oberfläche des Mediums 3 reflektiert und nach einer bestimmten Laufzeit wieder von der Sende-/Empfangseinheit 27 empfangen. Über die Laufzeit der Mikrowellen-Messsignale 6 wird der Füllstand 2 des Mediums 3 im Behälter 4 bestimmt.

Die Regel-/Auswerteeinheit 26 im Messumformer 23 hat die Aufgabe, das empfangene Reflektionssignale R der Mikrowellen-Messsignale 6 auszuwerten, indem das Messsignal 6 durch eine Signalverarbeitung und spezielle Signalauswertungsalgorithmen als eine Echokurve weiter verarbeitet wird und daraus die Laufzeit bzw. der Füllstand 2 bestimmt wird.

Die Regel-/Auswerteeinheit 26 kommuniziert über eine Kommunikationsschnittstelle 28 mit einer entfernten Kontrollstelle und/oder mit weiteren Füllstandsmessgeräten 1, die nicht explizit gezeigt sind. Über die Versorgungsleitung 29 kann das Füllstandsmessgerät 1 mit der benötigten Energie versorgt werden. Eine zusätzliche Versorgungsleitung 29 zur Energieversorgung des Füllstandsmessgeräts 1 entfällt, wenn es sich um ein so genanntes Zweileiter-Messgerät handelt, dessen Kommunikation und Energieversorgung über den Feldbus 30 ausschließlich und gleichzeitig über eine Zweidrahtleitung stattfindet. Die Datenübertragung bzw. Kommunikation über den Feldbus 30 erfolgt beispielsweise nach dem CAN-, HART-, PROFIBUS DP-, PROFIBUS FMS-, PROFIBUS PA-, oder FOUNDATION FIELDBUS- Standard.

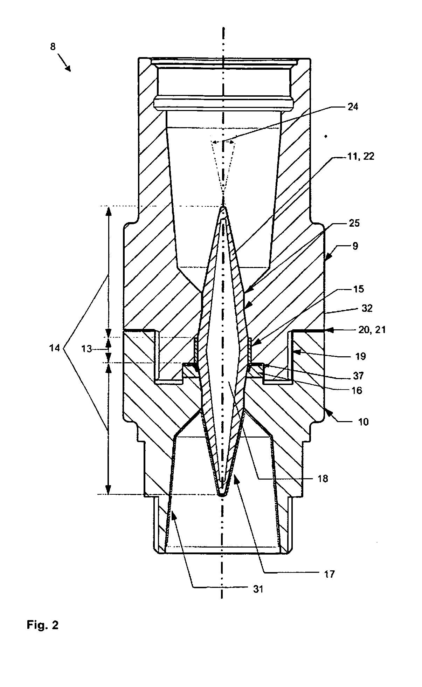

In Fig. 2 ist eine Schnittansicht eines Ausführungsbeispiels des Hohlleiters 8 mit dem erfindungsgemäßen eingeglasten, keramischen Prozesstrennelement 11 aufgezeigt. Erfindungsgemäß ist ein für Mikrowellen durchlässiger, keramischer Anpasskegel 22 vorgesehen, der mittels einer 1-2 mm dicken, ringförmigen Glasschicht 15 in einen metallischen Hohlleiter 8 eingeschmolzen ist. Der Hohlleiter 8 ist in diesem Fall als Rundhohlleiter ausgeführt. Es sind jedoch jegliche andere Formen des Hohlleiters 8 auf die erfindungsgemäße Einbringung des Anpasskegels 22 mittels einer Einglasung anwendbar. Durch Einglasung des keramischen Anpasskegels 22 in den Hohlleiter 8 entsteht eine gasdiffusionsdichte, mikrowellendurchlässige Prozesstrennung, die für den Einsatz bei hohen Temperaturen, hohen Drücken und aggressiven Prozessbedingungen bestens geeignet ist. Nachteilig an einer den Prozess berührenden Glassschicht 15 ist, dass jedoch Glas aufgrund von Wasserdampf eine Korrosion erfährt. Um diese Korrosion der dünnen Glasschicht 15 zu verhindern, ist ein Graphitpackungsring 16 zum Schutz der Glasschicht 15 dieser vorgelagert. Die Dichtwirkung des Graphitpackungsrings 16 wird dadurch erreicht, dass der Hohlleiter 8 zweiteilig ausgeführt ist und über die Verschraubung der beiden Elemente 9,10 des Hohlleiters 8 eine Druckkraft auf den Graphitpackungsring 16 ausgeübt wird. Zusätzlich kann ein korrosionsbeständiger Überzug 37 partiell auf die Glasschicht 15 aufgebracht werden. Dieser korrosionsbeständige Überzug 37 kann beispielsweise durch Aufdampfen einer Chrom-/Gold-Beschichtung hergestellt werden. Ein Graphitpackungsring 16 als Korrosionsschutz der Glasschicht 15 ist aufgrund des Korrosionsschutzes durch die Aufbringung eines korrosionsbeständigen Überzugs 37 nicht mehr zwingend notwendig. Jedoch wird durch den Graphitpackungsring 16 eine zusätzliche Dichtwirkung erreicht.

Durch das Einbringen des Prozesstrennelements 11 in den Hohlleiter 8 wird der Wellenwiderstand des Leitersystems verändert. Um diesen Wellenwiderstand anzupassen, verjüngt sich der Hohlleiter besonders im Anpassbereich 14. Das Prozesstrennelement 11 weist einen Anpasskegel 22 mit einer zylindrische Form auf, die sich im Anpassbereich 14 zu beiden Stirnflächen unter einem bestimmten Winkel 24 hin verjüngt und somit beidseitig zumindest einstufige oder mehrstufige Kegelansätze ausbildet. Die Ausführung des Prozesstrennelements 11 als Anpasskegel 22 hat zu Folge, dass der maximale Durchmesser des Kegels größer ist als der minimale Durchmesser des Hohlleiters 8 an der Stelle der maximalen Verjüngung. Aus diesem Grund kann es notwendig sein den Hohlleiter 8 an der Stelle der Einglasung bzw. Einbringung zweiteilig auszuführen und dort eine Trennstelle 20 vorzusehen.

In diesem Ausführungsbeispiel ist der Hohlleiter 8, wie schon erwähnt, aus zwei Einheiten, einem ersten Element 9 und einem zweiten Element 10, die über eine Verschraubung 19 miteinander verbunden sind, aufgebaut. An der Trennstelle 21 sind das erste Element 9 und das zweite Element 10 über eine radial umlaufende Schweißnaht an der Außenfläche 32 bzw. an der Trennstelle 20 miteinander gasdicht verschweißt. Diese zweiteilige Ausführung des Hohlleiters 8 ist in diesem Ausführungsbeispiel notwendig, da Erstens das Prozesstrennelement 11 aufgrund der Anpassung des Wellenwiderstands als Anpasskegel 22 ausgeführt ist und Zweitens zum Schutz der Glasschicht vor Wasserdampf ein zusätzlicher Graphitpackungsring als zusätzliches Dichtelement diesem vorgelagert ist.

Zur Verringerung der Dämpfung der Mikrowellen 6 ist beispielsweise ein Hohlraum 18 in dem Prozesstrennelement 11 ausgebildet, der mit einem dielektrischen Füllmaterial 38 gefüllt ist. Dieses Füllmaterial 38 weist eine gegenüber der Keramik des Anpasskegels 22 viel geringere Permittivitätszahl bzw. Dielektrizitätszahl auf, wodurch die Intensität der Mikrowellen 6 durch das Füllmaterial 38 nicht stark gedämpft werden. Desweitern ist als Füllmaterial 38 beispielsweise ein Material mit einer geringen thermischen Ausdehnung, z.B. Rohacell, mit Glashohlkugeln oder mit weiteren temperaturkompensierten Füllstoffen, einsetzbar.

Der Anpasskegel 22 wird erfindungsgemäß im ersten Element 9 des Hohlleiters 8 eingefügt. Hierbei wird entweder ein Glassubstrat als Pulver oder vorgefertigter Ring in einen freien Spalt im Einglasbereich 13 eingebracht und durch einen vorgegebnen Temperaturzyklus in einem Ofen aufgeschmolzen. Als Glassubstrat werden beispielsweise die für die Glasdurchführungen üblichen Gläser verwendet. In der Schmelzphase bildet die Glasschicht 15 zu dem metallischen Hohlleiter 8 und/oder zu dem keramischen Anpasskegel 22 eine stoffschlüssige, gasdiffusionsdichte Verbindung aus. Desweiteren ist er auch möglich, eine Glasschicht 15 direkt auf dem Keramikkörper des Anpasskegels 22 aufzubringen und dieses vorgefertigte Teil in die dafür vorgesehne Aufnehmung im ersten Element 9 des Hohlleiters 8 einzusetzen. Die Aufbringung einer dünnen Glasschicht 15 von einigen Millimetern kann beispielsweise wiederum durch ein chemisches oder physikalisches Gasphasenabscheidungs-Beschichtungsverfahren (CVD, PVD) erfolgen. Die Erhitzung der Glasschicht 15 kann beispielsweise auch dadurch erreicht werden, dass hoch energetische Mikrowellen mit einer hohen Intensität fokussiert auf die Glasschicht 15 eingestrahlt werden und dadurch nur zonal im Einglasbereich 13 eine starke Erwärmung erzeugt wird. Ist der Anpasskegel 22 über die Glasschicht 15 stoffschlüssig in das erste Element 9 des Hohlleiters 8 eingeschmolzen und ggf. eine korrosionsbeständiger Überzug 37 aufgebracht, so wird der Graphitpackungsring 16 über die Verschraubung 19 des zweiten Elements 10 des Hohlleiters 8 fest in die vorgesehen Aussparung unterhalb der Glasschicht 15 gepresst. Vorteilhafterweise ist wird der Ausdehnungskoeffizient der Materialien des Anpasskegels 22, des Hohlleiters 8 und der Glasschicht 15 so aufeinander abgestimmt, dass keine extremen Spannungen oder sogar Spannungsrisse in dem Materialverbund entstehen. Der Anpasskegel 22 wird beispielsweise aus einer technischen Aluminiumoxid-Keramik hergestellt.

Zur Erhöhung der Dichtigkeit und der Korrosionsbeständigkeit kann der in den Hohlleiter 8 eingeglaste, keramische Anpasskegel 22 und die Innenflächen 31 des Hohlleiters 8 selbst mit einer zusätzlichen Beschichtung 17 versehen werden. Diese Beschichtung kann beispielsweise wiederum durch ein einfaches chemisches oder physikalisches Gasphasenabscheidungs-Beschichtungsverfahren (CVD, PVD) erzeugt werden.

Ein weiterer Vorteil der Einglasung im Vergleich zur Lötung ist, dass keine aufwändige Oberflächenpräparation, wie Politur oder Härtung, der Keramik und keine teuren Materialien, wie z.B. Kovar für die Löthülse, erforderlich sind. Außerdem ist die Herstellung des Prozesstrennelements 11 und dessen Einglasung in den Hohlleiter 8 deutlich einfacher und damit wesentlich kostengünstiger.

Das erfindungsgemäße Prozesstrennelement 11 liefert weitere Vorteile, dass das Einkoppelelement 33 bei Kondensatbildung und/oder die Elektronik und das Einkoppelelement 33 abgenommen werden können, da in einer ersten Sicherheitsstufe die messinaktiven Teile der Antenneneinheit 7, wie beispielsweise die Flanschplattierung des Füllkörper 36, den Prozess nach außen hin abschließen und das Prozesstrennelement 11 eine zweite Sicherheitsstufe (second line of defence) ausbildet. Dadurch ist es möglich, bei einer Umrüstung oder Reparatur des Füllstandsmessgeräts 1 den Messumformer 23 auf die Antenneneinheit 7 im geschlossenen Prozess zu montieren. Je nach Ausführung und Anwendung kann das Füllstandsmessgerät 1 aus unterschiedlichen Modulen zusammengesetzt werden. Eine Umrüstung des Füllstandsmessgeräts 1 auf eine andere Einkoppelungsart, z.B. Stufen- oder Stifteinkopplung, oder eine andere Frequenz, z.B. 6 GHz oder 26 GHz, ist durch die Trennmöglichkeit der aktiven Teile von den passiven Teilen auch im geschlossenen Prozess möglich. Das Einkoppelelement 33 ist beispielsweise modular ausgeführt und kann über einen Verschraubung in den Hohlleiter 8 eingefügt werden.

### Bezugszeichenliste

**Tabelle 1**

| | |
|---|---|
| 1 | Füllstandsmessgerät |
| 2 | Füllstand |
| 3 | Medium |
| 4 | Behälter |
| 5 | Prozessraum |
| 6 | Mikrowellen, Mikrowellen-Messsignal |
| 7 | Antenneneinheit |
| 8 | Hohlleiter |
| 9 | erstes Element |
| 10 | zweites Element |
| 11 | Prozesstrennelement |
| 12 | Abstrahlelement |
| 13 | Einglasbereich |
| 14 | Anpassbereich |
| 15 | Glasschicht |
| 16 | Graphitpackungsring |
| 17 | Beschichtung |
| 18 | Hohlraum |
| 19 | Verschraubung |
| 20 | Schweißnaht |
| 21 | Trennstelle |
| 22 | Anpasskegel |
| 23 | Messumformer |
| 24 | Winkel |
| 25 | Stufen |
| 26 | Regel-/Steuereinheit |
| 27 | Sende-/Empfangseinheit |
| 28 | Kommunikationsschnittstelle |
| 29 | Versorgungsleitung |
| 30 | Kommunikationsleitung |
| 31 | Innenfläche |
| 32 | Außenfläche |
| 33 | Einkoppelelement |
| 34 | Glasdurchführung |
| 35 | Prozessanschluss |
| 36 | Füllkörper |
| 37 | Korrosionsbeständiger Überzug |
| 38 | Füllmaterial |
| | |
| R | Reflexionssignale |
| S | Sendesignale |

## Patentansprüche

1. Füllstandsmessgerät zur Ermittlung und Überwachung eines Füllstandes eines im Prozessraum eines Behälters befindlichen Mediums mittels einem Laufzeitmessverfahren von Mikrowellen, bestehend aus einem Messumformer und einer Antenneneinheit, die zumindest aus einem Hohlleiter und einem Abstrahlelement aufgebaut ist, wobei ein die Mikrowellen durchlässiges, Prozesstrennelement in den Hohlleiter zur Prozesstrennung zwischen dem Messumformers und dem prozessberührenden Abstrahlelement eingefügt ist,
**dadurch gekennzeichnet,**
**dass** das Prozesstrennelement (11) aus einem keramischen Material hergestellt ist und zumindest eine Glasschicht (15) aufweist, über die das Prozesstrennelement (11) in einem Einglasbereich (13) direkt in den Hohlleiter (8) eingeglast ist.

2. Vorrichtung nach Anspruch 1,
**dadurch gekennzeichnet,**
**dass** zumindest eine Graphitpackungsring (16) prozessseitig vorgesehen ist, die eine zusätzliche Dichtwirkung aufweist und die Glasschicht (15) der Direkteinglasung prozessseitig vor Korrosion durch das Medium (3) schützt.

3. Vorrichtung nach Anspruch 1 oder 2,
**dadurch gekennzeichnet,**
**dass** zumindest eine partielle aufgebrachte, korrosionsbeständiger Überzug (37) prozessseitig auf der Glasschicht (15) vorgesehen ist, der die Glasschicht (15) der Direkteinglasung prozessseitig vor Korrosion durch das Medium (3) schützt.

4. Vorrichtung nach Anspruch 1,
**dadurch gekennzeichnet,**
**dass** der Hohlleiter (8) mehrteilig aus zumindest einem ersten Element (9) und einem zweiten Element (10) aufgebaut ist.

5. Vorrichtung nach Anspruch 2 und 4,
**dadurch gekennzeichnet,**
**dass** eine gegenseitige Befestigung mittels einer Verschraubung (19) des ersten Elements (9) und des zweiten Elements (10) vorgesehen ist, die aufgrund eines entstehenden Gegendrucks auf den Graphitpackungsring (16) eine zusätzliche Dichtwirkung bewirkt.

6. Vorrichtung nach Anspruch 1,
**dadurch gekennzeichnet,**
**dass** eine umlaufende Schweißnaht (20) an der Außenfläche (32) des Hohlleiters (8) vorgesehen ist, die eine Trennstelle (21) des ersten Elements (9) und des zweiten Elements (10) des Hohlleiters (8) verdrehsicher fixiert.

7. Vorrichtung nach Anspruch 1, 2 oder 3,
**dadurch gekennzeichnet,**
**dass** die Glasschicht (15) eine Schichtdicke von 0,5 bis 5 Millimetern beträgt.

8. Vorrichtung nach Anspruch 1,
**dadurch gekennzeichnet,**
**dass** prozessseitig eine mikrowellendurchlässige, korrosionsbeständige Beschichtung (17) auf dem eingeglasten Prozesstrennelement (11) und/oder der Innenfläche (18) des Hohlleiters (8) vorgesehen ist.

9. Vorrichtung nach Anspruch 1 oder 8,
**dadurch gekennzeichnet,**
**dass** das keramische Prozesstrennelement (11) als ein Anpasskegel (22) ausgestaltet ist, dessen Querschnitt sich in einem Anpassbereich (14), ausgehend von einem Einglasbereich (13) der zonalen Direkteinglasung des Anpasskegels (22) in dem Hohlleiter (8), in zumindest einer Stufen (25) und unter zumindest einem Winkeln (24) konisch verjüngt.

10. Vorrichtung nach Anspruch 1, 8 oder 9,
**dadurch gekennzeichnet,**
**dass** im Innern des keramischen Prozesstrennelements (11) ein hermetisch dichter Hohlraum (18) ausgebildet ist.

11. Vorrichtung nach Anspruch 10,
**dadurch gekennzeichnet,**
**dass** in dem hermetisch dichten Hohlraum (18) des keramischen Prozesstrennelements 11 ein mikrowellendurchlässiges Füllmaterial (38) mit einem geringeren Permittivitätszahl vorgesehen ist.

12. Vorrichtung nach Anspruch 1, 4, 6, 8 oder 9,
**dadurch gekennzeichnet,**
**dass** ein einstufiger oder mehrstufiger linear abnehmender Innendurchmesser des Hohlleiters (8) in einem Anpassbereich (14) des Prozesstrennelements (11) in Richtung der zonalen Direkteinglasung vorgesehen ist.

13. Vorrichtung nach Anspruch 1, 4, 6, 8, 9 oder 10,
**dadurch gekennzeichnet,**
**dass** als Material für den Hohlleiter (8) ein Edelstahl-Rohr oder ein an den Innenflächen (31) metallisch beschichtetes Keramik- oder Kunststoffrohr vorgesehen ist.

14. Vorrichtung nach Anspruch 1,
**dadurch gekennzeichnet,**
**dass** als Antenneneinheit (7) eine Planarantenne, eine Parabolantenne, eine Hornantenne oder eine Stabantenne vorgesehen ist.

## Claims

1. Level measuring device for determining and monitoring a level of the medium located in the process chamber of a container using a method that measures the time of flight of microwaves, said device consisting of a transmitter and an antenna unit, which comprises at least a wave guide and an emitter element, wherein a microwave-transmissive process isolating element is integrated into the wave guide for the purpose of process isolation between the transmitter and the emitter element in contact with the process, **characterized in that**:
the process isolating element (11) is made from a ceramic material and has at least one glass layer (15) via which the process isolating element (11) is bonded in glass directly into the wave guide (8) in a glass area (13).

2. Unit as claimed in Claim 1,
**characterized in that**
at least one graphite packing ring (16) is provided on the process side, said ring having an additional sealing effect and protecting the glass layer (15) of the direct glass bonding on the process side against corrosion from the medium (3).

3. Unit as claimed in Claim 1 or 2,
**characterized in that**
at least a partially applied corrosion-resistant coating (37) is provided on the glass layer (15) on the process side, said coating protecting the glass layer (15) of the direct glass bonding on the process side against corrosion from the medium (3).

4. Unit as claimed in Claim 1,
**characterized in that**
the wave guide (8) is constructed from multiple parts, comprising at least one first element (9) and a second element (10).

5. Unit as claimed in Claim 2 and 4,
**characterized in that**
securement is provided by means of a threaded joint (19) of the first element (9) and the second element (10) which causes an additional sealing effect as a result of a counter pressure exerted on the graphite packing ring (16).

6. Unit as claimed in Claim 1,
**characterized in that**
a circumferential welding seam (20) is provided on the outer surface (32) of the wave guide (8) which secures a separation point (21) of the first element (9) and the second element (10) of the wave guide (8) against rotation.

7. Unit as claimed in Claim 1, 2 or 3
**characterized in that**
the thickness of the glass layer (15) is between 0.5 and 5 millimeters.

8. Unit as claimed in Claim 1,
**characterized in that**
on the process side, a microwave-transmissive, corrosion-resistant coating (17) is provided on the glass-bonded process isolating element (11) and/or the inner surface (18) of the wave guide (8).

9. Unit as claimed in Claim 1 or 8,
**characterized in that**
the ceramic process isolating element (11) is designed as an adapter cone (22) whose cross-section in an adjustment area (14) tapers starting from a glass bonding area (13) of the zonal direct glass bonding of the adapter cone (22) in the wave guide (8), in at least one step (25) and at at least one angle (24).

10. Unit as claimed in Claim 1, 8 or 9
**characterized in that**
a hermetically sealed hollow cavity (18) is formed inside the ceramic process isolating element (11).

11. Unit as claimed in Claim 10,
**characterized in that**
a microwave-transmissive filler material (38) which has a lower relative permittivity is provided in the hermetically sealed hollow cavity (18) of the ceramic process isolating element (11).

12. Unit as claimed in Claim 1, 4, 6, 8 or 9
**characterized in that**
an inner diameter of the wave guide (8), which has one or multiple stages and decreases linearly, is provided in an adjustment area (14) of the process isolating element (11) in the direction of the zonal direct glass bonding.

13. Unit as claimed in Claim 1, 4, 6, 8, 9 or 10
**characterized in that**
a stainless steel pipe or a ceramic or plastic pipe coated with metal on the inside (31) is provided as the material for the wave guide (8).

14. Unit as claimed in Claim 1,
**characterized in that**
a planar antenna, a parabolic antenna, a horn antenna or a rod antenna is provided as the antenna unit (7).

## Revendications

1. Transmetteur de niveau destiné à la détermination et la surveillance d'un niveau d'un produit se trouvant dans la chambre de process d'un réservoir au moyen d'un procédé de mesure du temps de propagation de micro-ondes, constitué d'un transmetteur et d'une unité d'antenne, qui se compose au minimum d'un guide d'ondes et d'un élément de rayonnement, un élément de séparation de process perméable aux micro-ondes étant inséré dans le guide d'ondes en vue de la séparation du process, entre le transmetteur et l'élément de rayonnement en contact avec le process,
**caractérisé en ce**
**que** l'élément de séparation de process (11) est fabriqué à partir d'un matériau céramique et présente au minimum une couche de verre (15), par l'intermédiaire de laquelle l'élément de séparation de process (11) est incorporé directement dans le guide d'ondes (8), dans une zone vitrée (13).

2. Dispositif selon la revendication 1,
**caractérisé en ce**
**qu'**est prévue, côté process, au moins une bague d'étanchéité en graphite (16), laquelle apporte un effet d'étanchéité supplémentaire et protège la couche de verre (15) du vitrage direct, côté process, contre la corrosion par le produit (3).

3. Dispositif selon la revendication 1 ou 2,
**caractérisé en ce**
**qu'**est prévu au minimum un revêtement (37) partiel résistant à la corrosion, côté process sur la couche de verre (15), lequel revêtement protège la couche de verre (15) du vitrage direct, côté process, contre la corrosion par le produit (3).

4. Dispositif selon la revendication 1,
**caractérisé en ce**
**que** le guide d'ondes (8) est constitué de plusieurs pièces, au minimum d'un premier élément (9) et d'un deuxième élément (10).

5. Dispositif selon la revendication 2 ou 4,
**caractérisé en ce**
**qu'**est prévue une fixation opposée au moyen d'un vissage (19) du premier élément (9) et du deuxième élément (10) qui, grâce à la contre-pression générée sur la bague d'étanchéité en graphite (16), produit un effet d'étanchéité supplémentaire.

6. Dispositif selon la revendication 1,
**caractérisé en ce**
**qu'**est prévu un cordon de soudure (20) périphérique sur la surface extérieure (32) du guide d'ondes (8), lequel fixe de façon résistante contre la torsion, un point de jonction (21) du premier élément (9) et du deuxième élément (10) du guide d'ondes (8).

7. Dispositif selon la revendication 1, 2 ou 3,
**caractérisé en ce**
**que** la couche de verre (15) présente une épaisseur de 0,5 à 5 millimètres.

8. Dispositif selon la revendication 1,
**caractérisé en ce**
**qu'**est prévu, côté process, un revêtement (17) résistant à la corrosion, perméable aux micro-ondes, sur l'élément de séparation de process (11) incorporé dans le verre et/ou la surface intérieure (18) du guide d'ondes (8).

9. Dispositif selon la revendication 1 ou 8,
**caractérisé en ce**
**que** l'élément de séparation de process (11) est conçu sous la forme d'un cône d'adaptation (22), dont la section diminue de façon conique dans une zone d'adaptation (14), en partant d'une zone vitrée (13) du vitrage direct zonal du cône d'adaptation (22) dans le guide d'ondes (8), selon au moins un palier (25) et selon au moins un angle (24).

10. Dispositif selon la revendication 1, 8 ou 9,
**caractérisé en ce**
**qu'**à l'intérieur de l'élément de séparation de process (11) céramique est formé un espace creux (18) hermétiquement étanche.

11. Dispositif selon la revendication 10,
**caractérisé en ce**
dans l'espace creux (18) hermétiquement étanche de l'élément de séparation de process (11) céramique est prévu un matériau de remplissage (38) d'une faible permittivité relative.

12. Dispositif selon la revendication 1, 4, 6, 8 ou 9,
**caractérisé en ce**
**qu'**est prévu un diamètre intérieur du guide d'ondes, à un ou plusieurs paliers et décroissant de façon linéaire dans une zone d'adaptation (14) de l'élément de séparation de process (11) en direction du vitrage direct zonal.

13. Dispositif selon la revendication 1, 4, 6, 8, 9 ou 10,
**caractérisé en ce**
**qu'**est prévu, en tant que matériau pour le guide d'ondes (8), un tube en acier inoxydable ou un tube en céramique ou plastique, dont les surfaces intérieures sont (31) pourvues d'un revêtement métallique.

14. Dispositif selon la revendication 1,
**caractérisé en ce**
**qu'**est prévue, en tant qu'unité d'antenne (7), une antenne planaire, une antenne parabolique, une antenne cornet ou une antenne fouet.
